# EUROPÄISCHE PATENTANMELDUNG

(11) **EP 0 614 078 A1**
(43) Veröffentlichungstag der Anmeldung: **07.09.1994**
(21) Anmeldenummer: 94250050.5
(22) Anmeldetag: 01.03.1994
(51) Int. Cl.: G01N 17/02

(54) **Anordnung zur Korrosionsmessung**

(30) Priorität: 02.03.1993 DE 4307266
(71) Anmelder: INSTITUT FÜR BIOPROZESS- UND ANALYSENMESSTECHNIK e.V., D-37308 Heiligenstadt (DE)
(72) Erfinder: Kraft, Detlef, Ing., D-37308 Heiligenstadt (DE); Liefeith, Klaus, Dipl.-Ing. Dr., D-37318 Uder (DE); Gastrock, Gunter, Dipl.-Ing., D-37308 Heiligenstadt (DE); Hildebrand, Gerhard, Dipl.-Ing., D-37318 Lutter (DE); Weber, Hubert, D-37308 Geisleden (DE)
(74) Vertreter: Maikowski, Michael, Dipl.-Ing. Dr.

(57) **Zusammenfassung**

Die Erfindung betrifft eine Anordnung zur Korrosionsmessung für den Einsatz in einem flüssigen Elektrolyten. Sie soll die Korrosionsmessung am Ort der Entstehung bzw. Anwendung der Elektrolyten z. B. in natülichen bzw. simulierten Prozessen ermöglichen, wobei die Messung auch unter sterilen Bedingungen möglich sein muß.

Eine Anordnung zur Korrosionsmessung in Rohrform mit einer von Elektrolyten definiert benetzbaren flächenförmigen metallischen Probe, mit einer auf die Probe ausgerichteten Bezugselektrode und mit einer vom Elektrolyten benetzbaren Gegenelektrode ist erfindungsgemäß als Tauchsonde ausgebildet, deren rohrförmiges Gehäuse einen gegenüber dem umgebenden Elektrolyten offenen Abschnitt aufweist, in dem die Gegenelektrode und die Probe angeordnet sind. Besonders vorteilhaft ist die Anordnung der Tauchsonde in einem Bioreaktor, in dem ein bestimmtes biologisches Milieu simulierbar ist . Mit dieser letztgenannten Anordnung ist es erstmalig möglich , die elektrochemische Korrosion von metallischen Biowerkstoffen im lebenden Organismus, z. B. von Dentallegierungen oder metallischen Implantatmaterialien, gezielt zu untersuchen.

## Beschreibung

Die Erfindung betrifft eine Anordnung zur Korrosionsmessung für den Einsatz in einem flüssigen Medium.

Es sind Meßanordnungen mit Korrosionsmeßsonden bekannt, die hauptsächlich in Industrieanlagen zur Bestimmung des Korrosionsgrades eines metallischen Materials eingesetzt werden. So ist z. B. in der DE 37 15 881 A1 eine Korrosionsmeßzelle beschrieben, die ein rohrförmiges Gehäuse für einen flüssigen Elektrolyten hat. Das Gehäuse ist an den Stirnseiten durch je eine Platte verschlossen, die fensterförmige Öffnungen haben, hinter denen auf der einen Seite eine zu untersuchende Probe und auf der anderen Seite eine Gegenelektrode angeordnet ist. Diese werden unter Zwischenlage von Dichtringen gegen die Platten gedrückt, so daß einerseits das rohrförmige Gehäuse an den Stirnseiten abgedichtet ist, andererseits die Proben durch den im Gehäuse befindlichen flüssigen Elektrolyten wegen der fensterförmigen Öffnungen in den Platten benetzt werden. Der Elektrolyt wird im Gehäuse durch eine außerhalb des Gehäuses angeordnete Pumpe umgewälzt.

Eine Bezugselektrode in Form einer sogenannten Haber-Lugin-Kapillare ist mit ihrer Spitze auf die Probe ausgerichtet.

Durch die Ausbildung des Fensters wird dem Elektrolyten eine definierte Oberfläche der Probe ausgesetzt, so daß reproduzierbare Meßergebnisse erzielt werden.

Diese Anordnung hat den Nachteil, daß die Elektrolyten, deren Einfluß auf bestimmte Proben untersucht werden soll, in die Meßzelle und das entsprechende Pumpensystem einzufüllen sind. Dabei ist es nicht möglich, bestimmte Veränderungen des Elektrolyten vorzunehmen, wie sie z. B. in natürlichen oder technischen Prozessen auftreten. Es ist auch schwer möglich, unter sterilen Bedingungen zu arbeiten, da einerseits das Einbringen eines sterilen Elektrolyten schwierig ist und andererseits das Pumpensystem schwer zu sterilisieren ist.

Aus der DE 28 09 322 A1 ist eine Korrosionsüberwachungssonde bekannt, die in das auf Korrosivität zu untersuchende Material so eingebracht werden kann, daß das Sondenelement mit diesem Material in Kontakt kommt, wobei das Sondenelement in einem offenen Abschnitt der Sonde untergebracht ist.

Diese Sonde weist den Nachteil auf, daß sie aufwendig aufgebaut ist. So sind speziell geformte stabförmige Elektroden aus dem zu untersuchenden Material erforderlich, die entweder in Scheiben aus dem gleichen Material wie die Elektroden gelagert sind oder aber eine komplizierte Form mit ringförmigen Lippen aufweisen.

Weiterhin handelt es sich bei diesem Sondenelement nicht um eine Anordnung aus Probe und Gegenelektrode, so daß potentiodynamische und/oder galvanodynamische Messungen nur schwer möglich sind.

Desweiteren schließt die Anordnung der Elektroden die Gefahr von Spaltkorrosionsprozessen nicht aus.

Die Korrosionsüberwachungssonde hat desweiteren den Nachteil, daß ein unkomplizierter Probenwechsel nicht möglich ist.

Der Erfindung liegt die Aufgabe zugrunde, eine Korrosionsmessung in flüssigen Elektrolyten am Ort ihrer Entstehung bzw. Anwendung z. B. in natürlichen bzw. simulierten Prozeßen vorzunehmen, wobei die Messung auch unter sterilen Bedingungen möglich sein muß.

Erfindungsgemäß wird das durch die Merkmale des Anspruchs 1 erreicht.

Eine Anordnung zur Korrosionsmessung in Rohrform mit einer von Elektrolyten definiert benetzbaren flächenförmigen metallischen Probe, mit einer auf die Probe ausgerichteten Bezugselektrode und einer vom Elektrolyten benetzbaren Gegenelektrode ist erfindungsgemäß als Tauchsonde ausgebildet, deren rohrförmiges Gehäuse einen gegenüber dem umgebenden Elektrolyten offenen Abschnitt aufweist, zu der der Elektrolyt Zutritt hat und in dem die Gegenelektrode und die Probe angeordnet sind. Der genannte Abschnitt kann z.

B. eine Ausnehmung im Rohr sein bzw. das Rohr kann in diesem Abschnitt Bohrungen aufweisen, durch die der Elektrolyt Zutritt zur Probe und zur Gegenelektrode hat.

Es ist zweckmäßig, daß die Probe und die Gegenelektrode quer zur Längsachse der rohrförmigen Korrosionsmeßsonde angeordnet sind, wobei die Probe am unteren Rand der Ausnehmumg im Gehäuse befestigt ist und die Gegenelektrode im Abstand dazu in der Ausnehmung angeordnet ist.

Die Probe ist weiterhin zweckmäßig über eine Kontaktbuchse und über einen auf diese drückenden Kontaktstift elektrisch kontaktiert. Die elektrische Zuleitung zum Kontaktstift und die elektrische Zuleitung zur Gegenelektrode verlaufen durch das rohrförmige Gehäuse zu einem Steckverbinder.

Für die Korrosionsmessung in sterilen Elektrolyten besteht die Sonde aus sterilisierbarem Material und sie hat einen Dichtring, mit dem sie in ein Gefäß steril einsetzbar ist.

Besonders vorteilhaft ist der Einsatz der Sonde in Verbindung mit einem Bioreaktor, in dem biologisch relevante Umgebungsbedingungen einstellbar sind. Damit ist es erstmalig möglich, Korrosionsmessungen direkt in einem Laborbioreaktor durchzuführen.

Eine besondere Ausführungsform stellt die Anordnung der Sonde in einem Bioreaktor dar, in dem ein definiertes biologisches Milieu, z. B. das bakterielle Milieu der Mundflora und/oder das im wesentlichen korrosionsbestimmende Milieu in der Umgebung von Implantaten im lebenenden Organismus simulierbar ist.

Ein Vorteil dieser Anordnung zur Korrosionsmessung besteht darin, daß damit reproduzierbare Korrosionsmessungen an Materialien unter realen Bedingungen in den Elektrolyten vorgenommen werden können, unter deren Einwirkung sie eingesetzt werden sollen, z. B. in verschmutzten Gewässern oder Chemikalien der Industrie. Damit können auch die durch die Veränderung von Elektrolyten in Prozessen hervorgerufenen Änderungen der Korrosion erfaßt werden.

Ein weiterer besonderer Vorteil besteht darin, daß durch den Einsatz der Sonde in einem Bioreaktor erstmalig die Korrosionsmessung unter simulierten biologischen Bedingungen möglich ist, insbesondere auch über eine längeren Zeitraum. Dadurch ist es überhaupt erst möglich, die elektrochemische Korrosion von metallischen Biowerkstoffen im lebenden Organismus, z. B. von Dentallegierungen oder metallischen Implantatmaterialien, gezielt zu untersuchen.

Die Erfindung soll in einem Ausführungsbeispiel anhand von Zeichnungen erläutert werden. Es zeigen:
- Fig. 1: den prinzipiellen Aufbau einer erfindungsgemäßen Anordnung zur Korrosionsmessung;
- Fig. 2: den schematischen Aufbau eines Korrosionsmeßplatzes mit einer Anordnung zur Korrosionsmessung im Reaktorgefäß eines Laborbioreaktors.

Die Anordnug zur Korrosionsmessung in Form einer Korrosionmeßsonde hat einen Sondenkopf 1 und einen Schaftteil 2 mit einem Steckverbinder 3 und einem Rundring 4, mit dessen Hilfe die Korrosionsmeßsonde in einem Deckel, z. B. eines Bioreaktors, steril eingesetzt werden kann. Der Sondenkopf 1 und das Schaftteil 2 sind miteinander verschraubt und der innere Hohlraum beider Teile ist durch eine Flachringdichtung 5 gegenüber dem Elektrolyten abgedichtet.

Der Sondenkopf 1 hat eine Ausnehmumg 19. Am Rande dieser Ausnehmung ist hinter einer fensterförmigen Öffnung 9 unter Zwischenlage eines Dichtringes 14 die zu untersuchende Probe 6 angeordnet, die die Arbeitselektrode darstellt. Sie ist durch eine Kontaktbuchse 10, eine Justierscheibe 11 und durch eine Verschlußschraube 12 im Sondenkopf positioniert. Zwischen der Kontaktbuchse 10 und der Justierscheibe 11 sitzt ein Rundring 13 zum Abdichten der Probenkammer im vorderen Teil der Sonde. Durch einen Kontaktstift 15 und die Kontaktbuchse 10 wird die Probe elektrisch kontaktiert. Eine Druckfeder 16 und eine Madenschraube 17 erzeugen dabei den notwendigen Kontaktdruck gegenüber der Kontaktbuchse 10. Der Kontaktstift 15 ist mit einem Anschlußdraht 18 am Steckverbinder 3 kontaktiert.

Gegenüber der Probe 6 ist in der Ausnehmung 19 eine quadratische Gegenelektrode 7 aus Platinblech angeordnet, die an einen Anschlußdraht 8 z. B. aus Platin angepunktet und im Sondenkopf 1 eingeklebt ist. Der Anschlußdraht 8 ist im hinteren Teil des Sondenkopfes herausgeführt und am Steckverbinder 3 kontaktiert.

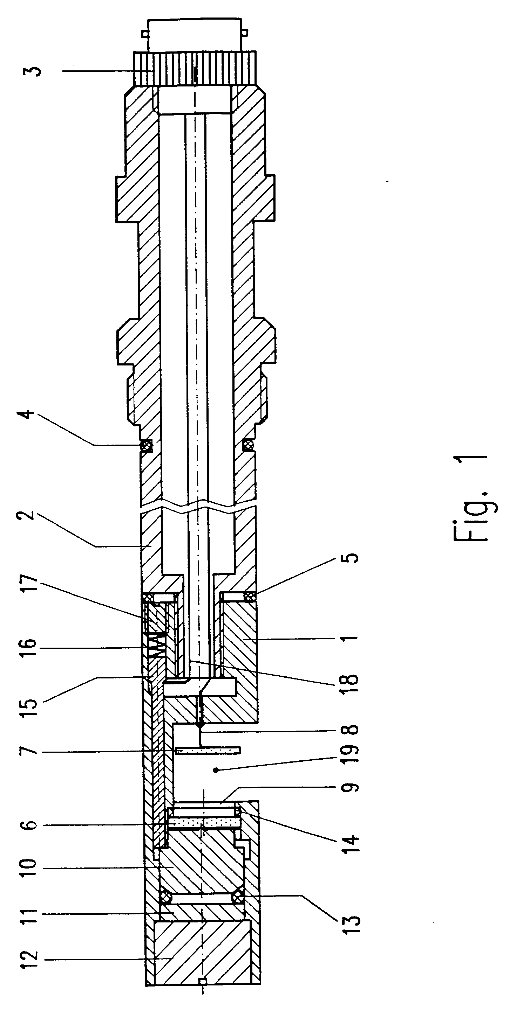

Die in Fig. 1 dargestellte Korrosionsmeßsonde kann der Untersuchung von metallischen Werkstoffen im medizinischen Bereich hinsichtlich der Biokompatibilität der Werkstoffe dienen als auch im technischen Bereich der Untersuchung von Materialzerstörungen durch mikrobiologische Substanzen.

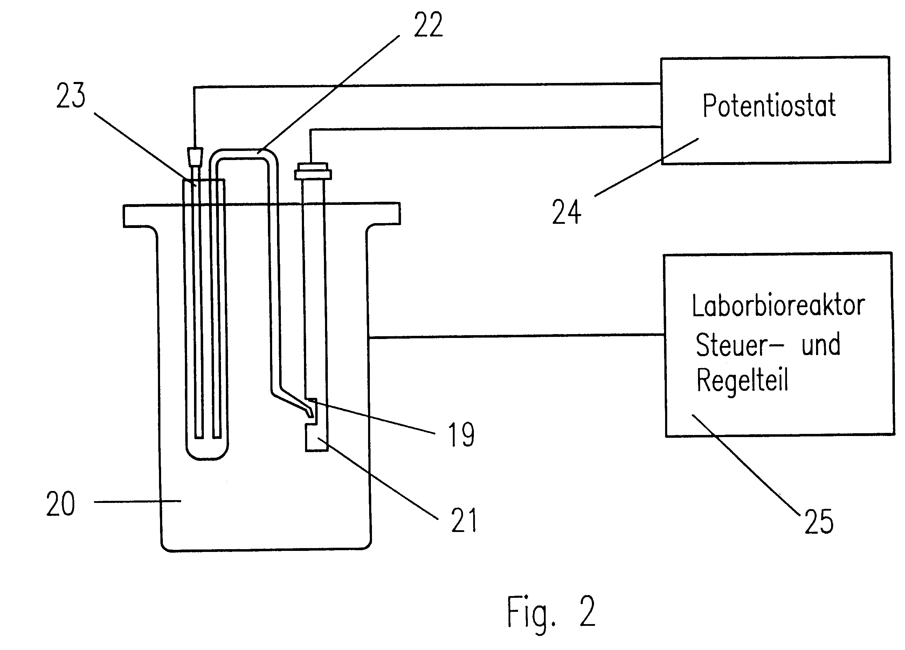

Der in Fig. 2 schematisch gezeigte Aufbau des Korrosionsmeßplatzes zeigt ein Reaktorgefäß 20 eines Bioreaktors mit der eingebauten Korrosionsmeßsonde 21 und einer über einer Haber-Luggin-Kapillare 22 angeordneten Bezugselektrode 23. Die Kapillare 22 ist mit ihrer Spitze auf die Probe 6 in der Ausnehmung 19 ausgerichtet. Die elektrischen Anschlüsse der Probe 6, der Gegenelektrode 7 sowie der Bezugselektrode 23 sind an einen Potentiostat 24 angeschlossen. Ein Steuer- und Regelteil 25 dient z. B. der pH-Messung, der Temperaturregelung und der Drehzahlregelung des Laborbioreaktors. Das sich zwischen der Bezugselektrode 23 und der Probe 6 als Arbeitselektrode einstellende Stromdichte-Potential-Verhalten ist ein Maß für die Korrosionsbeständigkeit der untersuchten Probe 6.

## Patentansprüche

1. Anordnung zur Korrosionsmessung in Rohrform mit einer von einem Elektrolyten definiert benetzbaren flächenförmigen metallischen Probe, mit einer auf die Probe ausgerichteten Bezugselektrode und einer vom Elektrolyten benetzbaren Gegenelektrode,
**dadurch gekennzeichnet,**
daß die Anordnung zur Korrosionsmessung als Tauchsonde ausgebildet ist, mit einem rohrförmigen Gehäuse, das einen gegenüber dem umgebenden Elektrolyten offenen Abschnitt aufweist, in dem die Gegenelektrode (7) und die Probe (6) angeordnet sind.

2. Anordnung nach Anspruch 1, **dadurch gekennzeichnet**, daß der offene Abschnitt eine Ausnehmung (19) im Rohr ist.

3. Anordnung nach Anspruch 1 und 2, **dadurch gekennzeichnet**, daß die Probe (6) und die Gegenelektrode (7) quer zur Längsachse der rohrförmigen Tauchsonde angeordnet sind, wobei die Probe (6) an dem Rand der Ausnehmung (19) im Gehäuse befestigt ist, der zum Eintauchende der Tauchsonde orientiert ist, und die Gegenelektrode (7) im Abstand dazu in der Ausnehmung (19) angeordnet ist.

4. Anordnung nach Anspruch 1 bis 3 , **dadurch gekennzeichnet**, daß die Probe (6) über eine Kontaktbuchse (10) und über einen auf diese drückenden Kontaktstift (15) elektrisch kontaktiert ist und daß eine erste elektrische Zuleitung zum Kontaktstift (15) und eine zweite elektrische Zuleitung (8) zur Gegenelektrode (7) durch das rohrförmige Gehäuse zu einem Steckverbinder (3) verlaufen.

5. Anordnung nach Anspruch 1 bis 4, **dadurch gekennzeichnet**, daß die Sonde für die Korrosionsmessung in sterilen Elektrolyten aus sterilisierbarem Material besteht und einen Dichtring (4) hat, mit dem sie in ein Gefäß steril einsetzbar ist.

6. Anordnung vorzugsweise nach Anspruch 1 bis 5, **dadurch gekennzeichnet**, daß die Sonde in einem Reaktorgefäß (20) eines Bioreaktors angeordnet ist, in dem biologisch relevante Umgebungsbedingungen einstellbar sind.

7. Anordnung nach Anspruch 5, **dadurch gekennzeichnet**, daß die Sonde in einem Bioreaktor angeordnet ist, in dem ein definiertes biologisches Milieu, z.B. das bakterielle Milieu der Mundflora und/oder das korrosionsbestimmende Milieu in der Umgebung von Implantaten simulierbar ist.
